# EUROPEAN PATENT APPLICATION

(11) **EP 0 961 479 A2**
(43) Date of publication of application: **01.12.1999**
(21) Application number: 99201538.8
(22) Date of filing: 15.05.1999
(51) Int. Cl.: H04N 1/32

(54) **Digital image authentication system**

(30) Priority: 27.05.1998 US 85899
(71) Applicant: EASTMAN KODAK COMPANY, Rochester, New York 14650 (US)
(72) Inventor: Masi, Louis Paul, Eastman Kodak Company, Rochester, New York 14650-2201 (US); Hasso, Charles Albert, Eastman Kodak Company, Rochester, New York 14650-2201 (US); Snyder, Patricia D., c/o Eastman Kodak Company, Rochester, New York 14650-2201 (US)
(74) Representative: Lewandowsky, Klaus, Dipl.-Ing.

(57) **Abstract**

A system for authenticating and rendering an image comprising: providing an original digital image; determining original digital authentication and characteristic data that is unique to the original digital image, and associating the data with the original digital image; at the time of displaying a digital image, determining display digital authentication data for the image; and comparing the display digital authentication data with the original digital authentication data associated with the displayed digital image to determine the authenticity of the displayed digital image; using image characteristic data to render the digital image for soft or hard copy display; and at the time of displaying or outputting a digital image using the characteristic data to optimize the output for the device.

## Description

### FIELD OF THE INVENTION

This invention relates in general to digital image systems and relates more particularly to a digital image authentication system containing image rendering data.

### BACKGROUND OF THE INVENTION

Digital image systems are rapidly becoming ubiquitous with the advent of such technologies as digital cameras, digitally scanned film, digital television, The Worldwide Web, digital medical and dental systems, etc. A problem arises as to the authenticity of digital images, since digital data can be easily copied and altered. Authenticity of an original image arises, for example, in the health care industry where medical or dental x-rays are sent to a health care claim paying organization (insurance company, managed care organization) for payment. Because the digital image x-ray image can be easily altered to show anatomical abnormalities not present in the original x-ray, the claim paying organization can be defrauded with overbilling.

Another important concern is that of rendering the digital image so that it will be suitable for any kind of output, such as soft or hard copy output. In order to optimize the digital image for any kind of selected output device, key image characteristics should be conveyed to the output device. Currently, any such information can be stored in the file header associated with various file formats. Alternatively, such information can be encrypted in the image data itself, thereby allowing the image to be defined as its essential image data, together with its characteristic data. This representation of an image can also improve portability.

U.S. Patent 5,579,393, issued Nov. 26, 1996, inventors Conner et al., discloses a system and method for secure medical and dental record interchange. The system disclosed is disadvantageous due to undue complexity and high equipment cost, and unsuitability for authentication of digital images in general.

### SUMMARY OF THE INVENTION

According to the present invention, there is provided a solution to the problems discussed above.

According to a feature of the present invention, there is provided a system for authenticating an image comprising: providing an original digital image; determining original digital authentication data that is unique to the original digital image; determining original image characteristic data, and associating the data with the original digital image; at the time of displaying a digital image, determining display digital authentication data for the image; and comparing the display digital authentication data with the original digital authentication data associated with the displayed digital image to determine the authenticity of the displayed digital image; utilizing image characteristic data for any kind of optimized output, such as soft or hard copy 20.

### ADVANTAGEOUS EFFECT OF THE INVENTION

The invention has the following advantages.
1. An original digital image can be authenticated in a simple and cost effective manner.
2. Original image authentication data can be dynamically calculated based on the unique characteristics of the original image.
3. The original image characteristic data can be embedded in the digital image so that it can be used in output processing steps to optimize quality.

### BRIEF DESCRIPTION OF THE DRAWINGS

Fig. 1 is a block diagram of the system of the present invention.
Fig. 2 is a diagrammatic view illustrating a feature of the present invention.
Figs. 3 and 4 are dental radiographs illustrating the present invention.

### DETAILED DESCRIPTION OF THE INVENTION

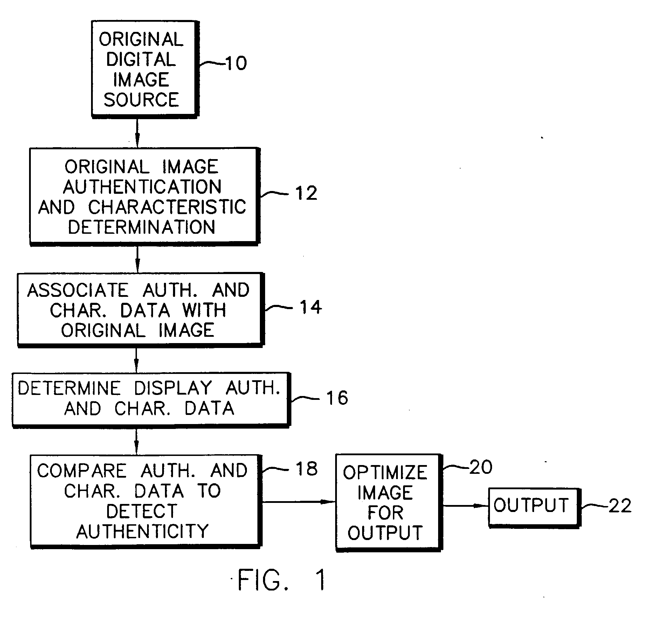

In general, the present invention assures that an original digital image is not altered when it is displayed after its origination, and that key characteristic data to be used to render said image for optimized output remains associated with the image data. Fig. 1 shows an embodiment of the present invention. Block 10 is the source of an original digital image. In one application, a medical or dental x-ray film can be scanned to produce an original digital x-ray image. The digital x-ray image can also be produced by a medical or dental diagnostic imaging device, by computed radiography, or by direct digital radiography. The original digital image can be any other type of digital image, such as a photograph, etc.

The original digital image typically represents an n x m pixel array, where n is the number of columns and m the number of rows in the pixel array. Each pixel is represented by a p-bit code value (e.g., an 8-bit pixel can have a code value of 0 - 255). Block 12 determines original digital authentication and characteristic data for the original digital image. The authentication data is determined based on the unique pixel data of the image. The characteristic data is determined based on the image capture device and its intended use such as hard copy outputted by a particular output device. For example, the code values of some or all of the pixels in the original digital image can be added and a check sum determined. Other algorithms based on the code values of the original image or based on other unique characteristics of the original digital image can also be used.

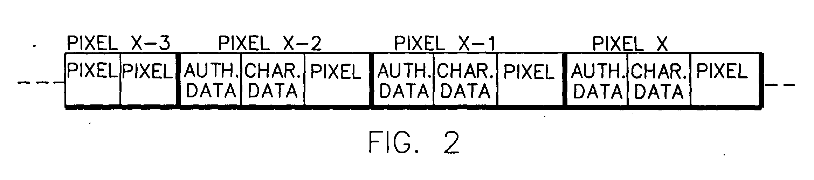

In box 14, the original digital authentication and characteristic data is associated with the original digital image. Although the authentication and characteristic data can be located in a header for the original digital image file, according to a feature of the present invention, the authentication and characteristic data is embedded in the digital image itself. One technique would be to embed the check sum or other authentication and characteristic data in the lower order bits of the last bytes of the image (See: Fig. 2). The result has no visible effect on the image when it is viewed or printed.

When a digital image is to be displayed, display digital authentication and characteristic data is determined for the digital image. (box 16). The display digital authentication data is then compared with the original digital authentication data associated with the image to be displayed, to determine whether the image is authentic or not (box 18). If the image is determined to be authentic, it can be assumed that the image has not been manipulated in any way since its capture and determination of the original digital authentication data

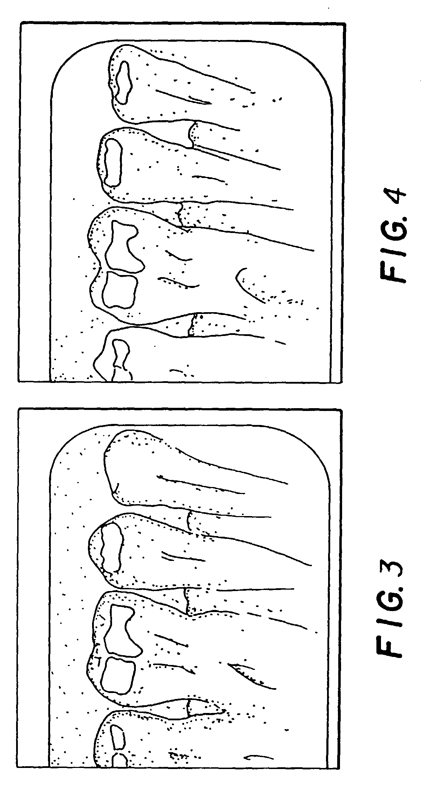

Figs. 3 and 4 respectively show an unaltered dental x-ray and an altered dental x-ray which includes an added dental filling at 30.

When the authenticated digital image is displayed, it can be enhanced using the characteristic data and known tone scale and other image enhancement techniques.

The invention has been described in detail with particular reference to certain preferred embodiments thereof, but it will be understood that variations and modifications can be effected within the spirit and scope of the invention.

## Claims

1. A system for authenticating and representing an image comprising:
providing an original digital image;
determining original digital authentication and characteristic data that is unique to the original digital image, and associating said data with said original digital image;
at the time of displaying a digital image, determining display digital authentication data for said image;
comparing the display digital authentication data with original digital authentication data associated with the displayed digital image to determine the authenticity of said displayed digital image; and
at the time of displaying or outputting a digital image using the characteristic data to optimize the output for the device.

2. The system of claim 1 wherein said original digital image includes a plurality of pixels of n bits each, and wherein said original digital authentication data is embedded in at least some of the bits of some of said plurality of pixels.

3. The system of claim 1 wherein said original digital image and said displayed digital image include a plurality of pixels of n bits each, and wherein said determining steps include determining a check sum of at least some of said plurality of pixels.

4. The system of claim 1 wherein said original digital image and said outputted digital image include a plurality of pixels of n bits each, and wherein said determining steps include applying characteristic data for rendering said digital image in soft and hardcopy output.
